# EUROPEAN PATENT APPLICATION

(11) **EP 2 661 069 A2**
(43) Date of publication of application: **06.11.2013**
(21) Application number: 13166032.6
(22) Date of filing: 30.04.2013
(51) Int. Cl.: H04N 1/387, H04N 1/409

(54) **Image editing apparatus, image editing method, and storage medium**

(30) Priority: 02.05.2012 JP 2012105024
(71) Applicant: Fujifilm Corporation, Minato-ku Tokyo 106-8620 (JP)
(72) Inventor: Seto, Satoshi, Tokyo, 107-0052 (JP)
(74) Representative: Klunker . Schmitt-Nilson . Hirsch

(57) **Abstract**

A see-through image (110, 110A, 110B) is generated in which a second content image group (Cg2), which is placed on a second surface (90) as one of respective opposite surfaces, is superposed on a first content image group (Cg1), which is placed on a first surface (80) as another of the respective opposite surfaces, so as to be visible therethrough. Movement of one of the first content image group (Cg1) and the second content image group (Cg2) is commanded, by designating a position or a mark on the see-through image (110, 110A, 110B) displayed on a display unit (42) through a user interface.

## Description

### BACKGROUND OF THE INVENTION

### Field of the Invention:

The present invention relates to an image editing apparatus, an image editing method, and a storage medium for imposing a plurality of content images on both surfaces of an output medium.

### Description of the Related Art:

Recently, with the progress of DTP (DeskTop Publishing) and CTP (Computer To Plate) technologies, attempts have been made to digitize the entire workflow of a printing process in the printing field. For example, there have been proposed various technologies for positionally adjusting content images on double-faced prints.

Japanese Laid-Open Patent Publication No. 2005-122300 discloses a system and method for adjusting the layout of a content image on one surface depending on the layout of a changed content image on an opposite surface in order to maintain relative positions of the respective content images.

### SUMMARY OF THE INVENTION

For various reasons having to do with printers, imposition data for respective surfaces of a double-faced print may have to be generated and saved independently.

However, the adjusting method disclosed in Japanese Laid-Open Patent Publication No. 2005-122300 is not effective for independent imposition data, since the method is based on the assumption that an association between both surfaces of an output medium is known beforehand.

It is an object of the present invention to provide an image editing apparatus, an image editing method, and a storage medium, which are capable of easily adjusting the layout of content images imposed on respective opposite surfaces of an output medium.

According to the present invention, there is provided an image editing apparatus for imposing at least one content image on both surfaces of an output medium, comprising a see-through image generator for generating a see-through image in which a second content image group, which is placed on a second surface as one of both surfaces, is superposed on a first content image group, which is placed on a first surface as another of both surfaces, so as to be visible therethrough, a display unit for displaying the see-through image generated by the see-through image generator, an image movement commander for commanding movement of one of the first content image group and the second content image group by designating a position or a mark on the see-through image displayed on the display unit through a user interface, a movement distance calculator for calculating a relative movement distance between before and after the movement by which one of the first content image group and the second content image group is moved, in response to a movement command from the image movement commander, and a position changer for changing a position on the first surface of at least one content image of the first content image group, or a position on the second surface of at least one content image of the second content image group, by the relative movement distance calculated by the movement distance calculator.

As described above, the image editing apparatus includes the see-through image generator, which generates a see-through image in which a second content image group on the second surface of the output medium is superposed on a first content image group on the first surface of the output medium so as to be visible therethrough, and the image movement commander, which commands movement of one of the first content image group and the second content image group by designating a position or a mark on the displayed see-through image through the user interface. Therefore, the operator can issue a command to move the first content image group or the second content image group while visually recognizing the relative positional relationship between content images in the see-through image. Thus, the positions of the content images, which are imposed on respective opposite surfaces of the output medium, can easily be adjusted.

The see-through image generator preferably generates the see-through image in which relative positions of the first content image group and the second content image group are changed, in response to movement command from the image movement commander.

The image editing apparatus preferably further comprises a display form commander for commanding a display form of the see-through image.

The display form commander preferably commands a display magnification ratio for the see-through image.

The display form commander preferably commands a transmittance of the second content image group of the see-through image.

The position changer preferably inhibits the positions of the first content image group and the second content image group from being changed, or allows the positions of the first content image group and the second content image group, which have been inhibited from being changed, to be changed, in response to a predetermined command.

The image movement commander preferably commands movement by designating a positioning mark, which is included commonly in the first content image group and the second content image group.

The image movement commander preferably commands movement by bringing positioning marks, which are included commonly in the first content image group and the second content image group, into alignment with each other, if the distance between the positioning marks falls within a predetermined range.

The position changer preferably changes positions of all of the content images, content images per signature, or content images per page, of the first content image group or the second content image group.

According to the present invention, there also is provided an image editing method to be carried out by an image editing apparatus for imposing at least one content image on both surfaces of an output medium, comprising the steps of generating a see-through image in which a second content image group, which is placed on a second surface as one of both surfaces, is superposed on a first content image group, which is placed on a first surface as another of both surfaces, so as to be visible therethrough, displaying the generated see-through image on a display unit, commanding movement of one of the first content image group and the second content image group by designating a position or a mark on the see-through image displayed on the display unit through a user interface, calculating a relative movement distance between before and after the movement by which one of the first content image group and the second content image group is moved, in response to a movement command, and changing a position on the first surface of at least one content image of the first content image group, or a position on the second surface of at least one content image of the second content image group, by the calculated relative movement distance.

According to the present invention, there further is provided a non-transitory storage medium storing therein a program for imposing at least one content image on both surfaces of an output medium, the program enabling a computer to carry out the steps of generating a see-through image in which a second content image group, which is placed on a second surface as one of both surfaces, is superposed on a first content image group, which is placed on a first surface as another of both surfaces, so as to be visible therethrough, displaying the generated see-through image on a display unit, commanding movement of one of the first content image group and the second content image group by designating a position or a mark on the see-through image displayed on the display unit through a user interface, calculating a relative movement distance between before and after the movement by which one of the first content image group and the second content image group is moved, in response to a movement command, and changing a position on the first surface of at least one content image of the first content image group, or a position on the second surface of at least one content image of the second content image group, by the calculated relative movement distance.

With the image editing apparatus, the image editing method, and the storage medium according to the present invention, the see-through image generator generates a see-through image in which a second content image group on the second surface of the output medium is superposed on a first content image group on the first surface of the output medium so as to be visible therethrough. Further, the image movement commander commands movement of one of the first content image group and the second content image group by designating a position or a mark on the displayed see-through image through the user interface. Therefore, the operator can issue a command to move the first content image group or the second content image group while visually recognizing the relative positional relationship between the content images in the see-through image. Thus, the positions of the content images, which are imposed on both surfaces of the output medium, can easily be adjusted.

The above and other objects, features, and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a block diagram of a print production system incorporating a DTP apparatus, which serves as an image editing apparatus according to an embodiment of the present invention;
FIG. 2 is an electric block diagram of a raster image processor (RIP) shown in FIG. 1;
FIG. 3 is a flowchart of an operation sequence of the RIP shown in FIGS. 1 and 2;
FIG. 4A is a front elevational view of a first surface of a print shown in FIG. 1;
FIG. 4B is a front elevational view of a second surface of the print shown in FIG. 1;
FIG. 5 is a view showing a first image representing an example of a setting screen;
FIG. 6 is a view showing a second image representing an example of a setting screen;
FIG. 7 is a view showing a third image representing an example of a setting screen; and
FIGS. 8A and 8B are views, which are illustrative of a process of changing the layout of content images.

### DESCRIPTION OF THE PREFERRED EMBODIMENTS

An image editing method according to a preferred embodiment of the present invention, in relation to an image editing apparatus, a program (storage medium), and a print production system for carrying out the image editing method, will be described below with reference to the accompanying drawings.

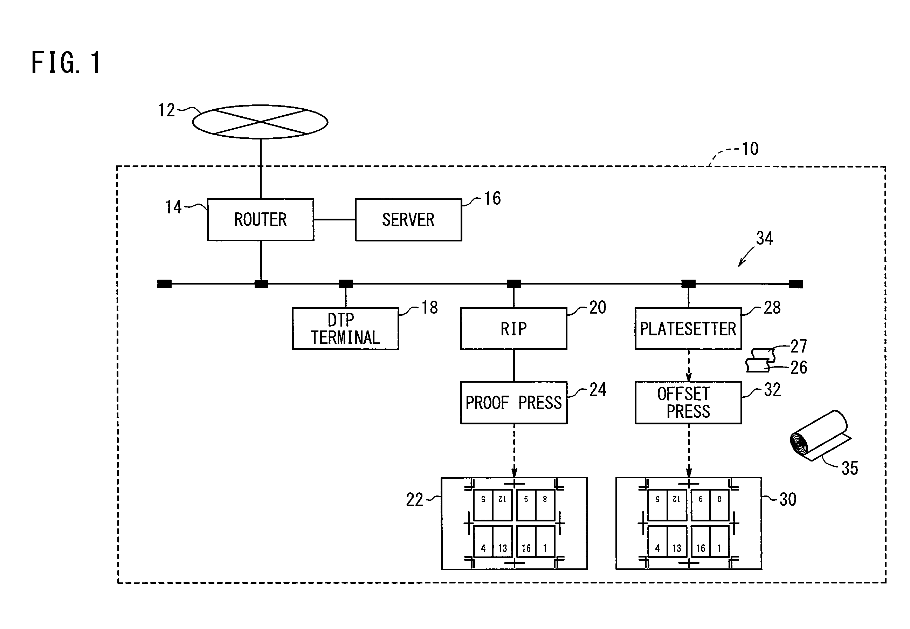

FIG. 1 shows in block form a print production system 10 incorporating a raster image processor (RIP), which serves as an image editing apparatus according to an embodiment of the present invention.

As shown in FIG. 1, the print production system 10 includes a router 14 as a device connected to a network 12, a server 16 accessible through a network 12 from terminal devices, not shown, that belong to external networks, a DTP (Desktop Publishing) terminal 18 for performing a DTP process including a process of editing content data acquired from the server 16 or the like, a raster image processor (RIP) 20 for performing various image processing techniques such as a rasterizing process, a color conversion process, etc., on proofread data or platemaking data generated by the DTP terminal 18, a proof press 24 for printing a proof 22 based on processed proofread data sent from the RIP 20, a platesetter 28 for producing printing plates 26, 27 based on platemaking data sent from the RIP 20, and an offset press 32 for printing a print 30 with printing plates 26, 27 that are mounted in the offset press 32.

The server 16 is a core device for implementing workflow management in the print production system 10. The server 16 is connected through the router 14 and the network 12 for communication with terminal devices of at least one of designers and production companies, not shown. The server 16 also is connected for communication with the DTP terminal 18, the RIP 20, and the platesetter 28, through a LAN (Local Area Network) 34 that makes up part of the print production system 10.

The server 16 is arranged to perform a function as a file server for storing and transferring various data files, a function as an authority management server for managing task authorities that can be carried out by terminals, users, or printing jobs, and a function as a mail server for generating and distributing notice mails at given times such as the start and end of various processes. The various data files that can be managed by the server 16 as the file server include content data files, proof data files, platemaking data files, job ticket files, e.g., JDF (Job Definition Format) files, ICC (International Color Consortium) profiles, color sample data files, etc.

The DTP terminal 18 generates edited data per page from content data representing characters, figures, patterns, pictures, etc., which have been processed by a preflight process. The DTP terminal 18 also performs an imposing process in accordance with a binding process and a page folding process, which have been designated, by referring to tag information of a job ticket.

The RIP 20 functions as a print processing server for at least one printing press. In FIG. 1, the RIP 20 is connected for communication with the proof press 24 and the platesetter 28. The RIP 20 converts PDL data described in a page description language (hereinafter also referred to as "page description data") into print data suitable for various output devices, and supplies the print data to the proof press 24 or the platesetter 28.

The proof press 24 prints a proof 22 based on printing data supplied from the RIP 20. The proof press 24 may comprise a DDCP (Direct Digital Color Proofer), an ink jet color proofer, a low-resolution color laser printer (electrophotographic printer), an ink jet printer, or the like.

The offset press 32 applies inks to principal surfaces of an output medium 35 (printable medium) through the printing plates 26, 27 and intermediate transfer mediums, not shown, to produce a print 30 with color images formed on both surfaces thereof. The offset press 32 may be replaced with a digital printing press for direct printing. The digital printing press may comprise an ink jet color proofer, a color laser printer (electrophotographic printer), or the like.

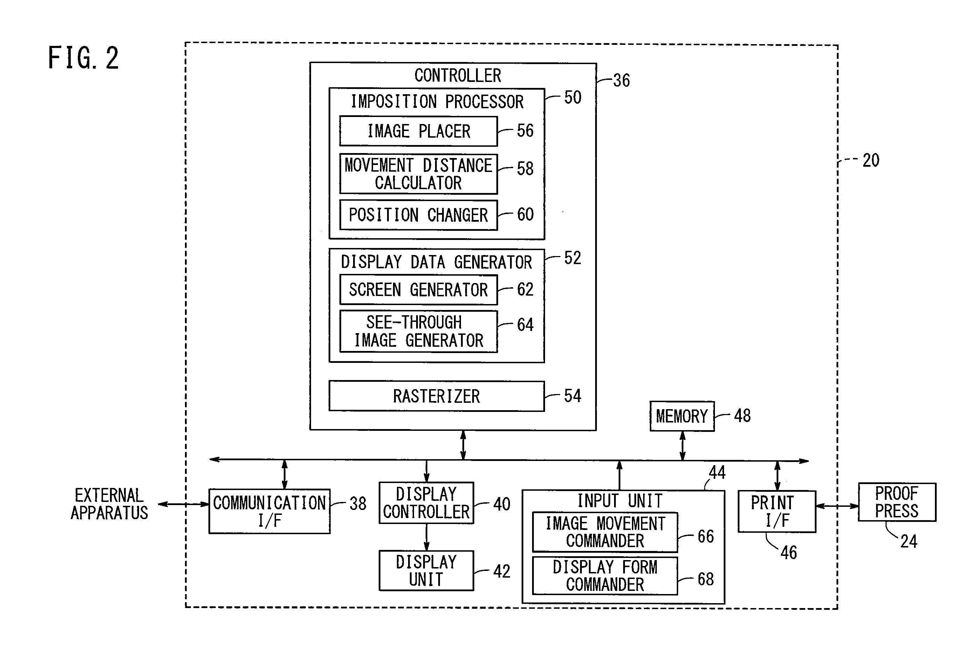

FIG. 2 is an electric block diagram of the RIP 20 shown in FIG. 1. As shown in FIG. 2, the RIP 20 comprises a computer including a controller 36, a communication I/F 38, a display controller 40, a display unit 42, an input unit 44, a print I/F 46, and a memory 48 (storage medium).

The communication I/F 38 is an interface for sending electric signals to and receiving electric signals from various external apparatus. For example, the communication I/F 38 can acquire various items of information such as proof data, platemaking data, ICC profiles, etc., which are managed and saved in the server 16 (see FIG. 1).

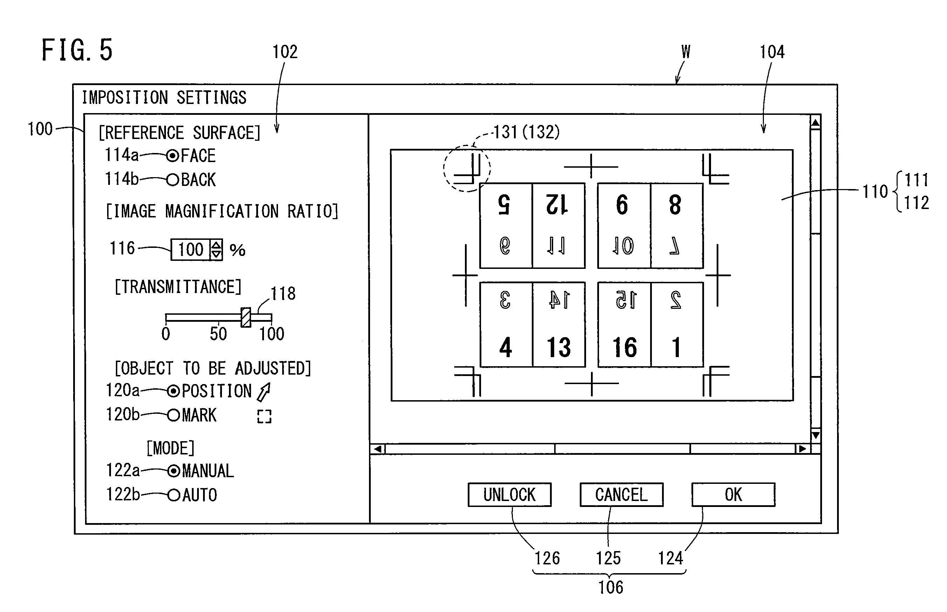

The display controller 40 comprises a control circuit for controlling the display unit 42 under the control of the controller 36. More specifically, in a case where the display controller 40 outputs a display control signal to the display unit 42 via a non-illustrated I/F, the display unit 42 is energized to display various images including the windows W shown in FIGS. 5 through 7.

The print I/F 46 is an interface for sending and receiving electric signals representing printing data. The print I/F 46 sends print data to the proof press 24 in order to print a desired proof 22.

The memory 48 stores programs and data, which are required for the controller 36 to control various components. The memory 48 may comprise a non-transitory computer-readable storage medium such as a nonvolatile memory, a hard disk, or the like.

The controller 36 comprises a processor such as a CPU (Central Processing Unit) or the like. The controller 36 performs various routines to function as an imposition processor 50, a display data generator 52, and a rasterizer 54, by reading and executing programs stored in the memory 48.

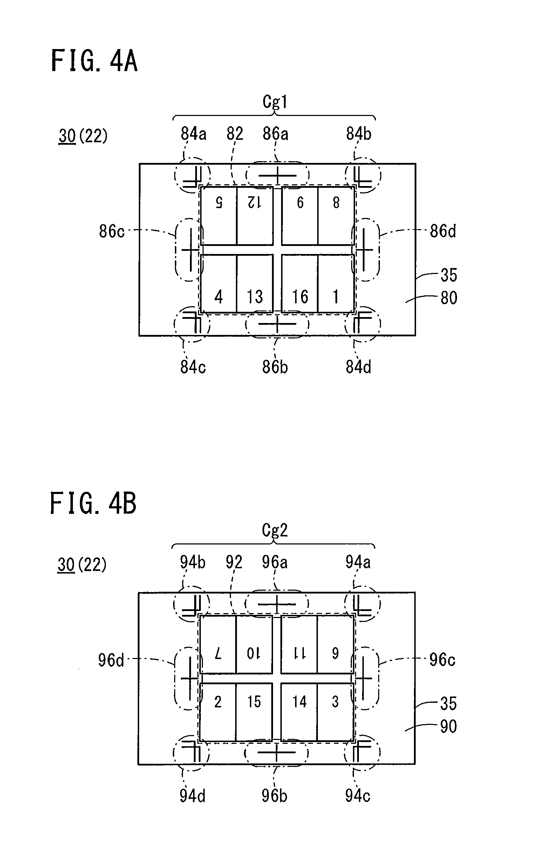

The imposition processor 50 generates imposition data, e.g., a job ticket, for imposing one or more content images on both surfaces of an output medium 35 having a given size. More specifically, the imposition processor 50 includes an image placer 56 for determining positions of a first content image group Cg1 (see FIG. 4A) to be placed on a first surface 80, and positions of a second content image group Cg2 (see FIG. 4B) to be placed on a second surface 90, a movement distance calculator 58 for calculating a relative movement distance between before and after the movement that the first content image group Cg1, etc., moves, and a position changer 60 for changing the positions determined by the image placer 56.

The display data generator 52 includes a screen generator 62 for generating a setting screen 100 (see FIG. 5, etc.), and a see-through image generator 64 for generating an image (hereinafter referred to as a "see-through image") in which the second content image group Cg2 is superposed on the first content image group Cg1 so as to be visible therethrough.

The rasterizer 54 performs a rasterizing process on page description data that have been imposed. The rasterizing process includes a data format converting process for converting PDL format data into raster format data, and a color matching process using an ICC profile.

The input unit 44 comprises various input devices including a mouse, a track ball, a keyboard, etc. The display function of the display unit 42 and the input function of the input unit 44 are used in combination as a user interface. The input unit 44 functions as an image movement commander 66 for commanding movement of the second content image group Cg2, etc., on a see-through image 110 (see FIG. 5), and a display form commander 68 for commanding a display form of the see-through image 110.

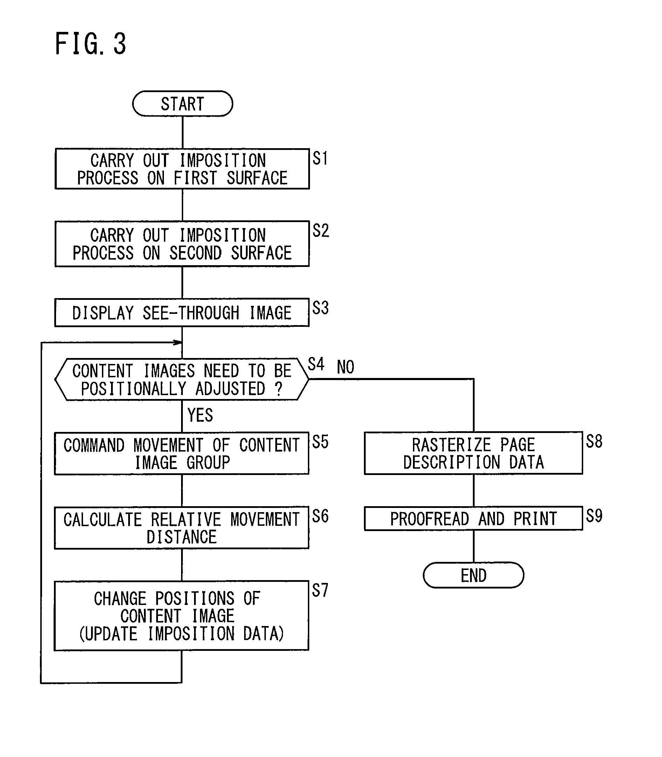

The RIP 20, which serves as the image editing apparatus according to the present embodiment, is basically configured as described above. Operations of the RIP 20 will be described below with reference to the flowchart shown in FIG. 3.

In step S1 shown in FIG. 3, the imposition processor 50 carries out an imposition process on the first surface 80 of the output medium 35 while referring to tag information, which represents a production type of a job ticket. More specifically, the image placer 56 places one or two or more content images including page images, positioning marks, etc., at positions within a predesignated region on the first surface 80. An example of the print 30 or the proof 22 to be produced by the imposition process in step S1 will be described below with reference to FIG. 4A.

As shown in FIG. 4A, the first surface 80 of the output medium 35 includes, as content images thereof, a plate area 82 representing a division of eight pages, four corner register marks 84a through 84d for registering printing plates at a time that the first surface 80 is printed, and four fold register marks 86a through 86d. A set of such content images on the first surface 80 will be referred to as the first content image group Cg1.

In step S2, the imposition processor 50 carries out an imposition process on the second surface 90 of the output medium 35 while referring to the tag information of the job ticket. More specifically, the image placer 56 places one or two or more content images including page images, positioning marks, etc., at positions within a predesignated region on the second surface 90. An example of the print 30 or the proof 22 to be produced by the imposition process in step S2 will be described below with reference to FIG. 4B.

As shown in FIG. 4B, the second surface 90 of the output medium 35 includes, as content images thereof, a plate area 92 representing a division of eight pages, four corner register marks 94a through 94d for registering printing plates at a time that the second surface 90 is printed, and four fold register marks 96a through 96d. A set of such content images on the second surface 90 will be referred to as a second content image group Cg2.

In steps S1 and S2, therefore, the imposition processor 50 generates imposition data according to a binding process and a page folding process, which have been designated. The imposition data include information concerning positions where the content images are placed in the first content image group Cg1 and the second content image group Cg2.

According to a normal double-faced printing process, since the imposition data for surfaces are managed comprehensively, the content images are not shifted out of position. For various reasons in relation to printers, however, imposition data for each surface of double-faced prints may have to be generated and saved independently. At this time, it is necessary to confirm whether or not the positions of the content images, which are placed on the surfaces, are suitable, and to adjust the positions of the content images if required.

In step S3, the RIP 20 displays a see-through image 110 (see FIG. 5), which simulates the layout imposed in steps S1 and S2 on the display unit 42. Prior to displaying such a see-through image 110, the see-through image generator 64 generates a see-through image 110 while referring to the imposition data generated by the imposition processor 50. The screen generator 62 generates display data for a setting screen 100 (see FIG. 5), and then supplies the generated display data to the display controller 40. The display controller 40 displays a window

W including the setting screen 100 on the display unit 42.

As shown in FIG. 5, the setting screen 100 includes a display setting field 102, an image display field 104, and a button group 106. The display setting field 102 functions as the display form commander 68 (see FIG. 2) for commanding a display form of the see-through image 110.

The image display field 104 displays a see-through image 110, which simulates an imposed layout on a print 30. The see-through image 110 includes the second content image group Cg2 (see FIG. 4B) on the second surface 90, which is superposed on the first content image group Cg1 (see FIG. 4A) on the first surface 80 so as to be visible therethrough. More specifically, the see-through image 110 includes a non-transmissive image region 111 having a non-transmissive image, and a transmissive image region 112 having a transmissive image, with the non-transmissive image region 111 and the transmissive image region 112 being superposed on one another.

The display setting field 102 displays various user control options, i.e., radio buttons 114a, 114b, a spin box 116, a slide bar 118, radio buttons 120a, 120b, and radio buttons 122a, 122b.

Using the radio button 114a or 114b, the operator as a user of the DTP terminal 18 can alternatively select the direction in which the print 30 is to be viewed. In FIG. 5, "face" (radio button 114a) is selected, and the see-through image 110 is displayed as an image viewed from the first surface 80. In this case, the see-through image generator 64 generates a see-through image 110 with the first content image group Cg1 placed in the non-transmissive image region 111 and the second content image group Cg2 placed in the transmissive image region 112. Alternatively, if "back" (radio button 114b) is selected, then the see-through image 110 is displayed as an image viewed from the second surface 90.

The operator can scale up or down the displayed see-through image 110 in the image display field 104 by changing an image magnification ratio (display magnification ratio) with the spin box 116. The user can also change the transmittance of the second content image group Cg2 (transmissive image region 112) on the see-through image 110 by changing the transmittance with the slide bar 118.

The button group 106 includes a button 124 labeled "OK", a button 125 labeled "CANCEL", and a button 126 labeled "UNLOCK". The "UNLOCK" button 126 and the display setting field 102 function as the image movement commander 66 (see FIG. 2) for commanding movement of the second content image group Cg2 on the see-through image 110.

In step S4, the operator judges whether or not the content images, which already have been placed in steps S1 and S2, need to be positionally adjusted. More specifically, the operator confirms the rendered form of the see-through image 110 (see FIG. 5), and judges whether or not objects, e.g., corner register marks, which exist commonly in the non-transmissive image region 111 and the transmissive image region 112, are positionally aligned with each other.

The print 30 is required to have an extremely high level of positional accuracy on both faces thereof. Even if the operator observes the see-through image 110 shown in FIG. 5, the operator may find it difficult to judge whether or not the content images need to be positionally adjusted. If the content images need to be positionally adjusted, the operator also finds it difficult to determine how much positional adjustment is required. To circumvent this difficulty, the operator chooses certain options in the display setting field 102 in order to change the form in which the see-through image 110 is displayed.

For example, in a case where the operator changes the input values in the spin box 116, the display controller 40 replaces the see-through image 110 shown in FIG. 5 with a new see-through image 110A, which is displayed in a different display form. More specifically, the see-through image generator 64 generates a new see-through image 110A reflecting a changed image magnification ratio entered via the spin box 116. Then, the screen generator 62 generates display data with a corresponding image change for the setting screen 100, and supplies the generated display data to the display controller 40.

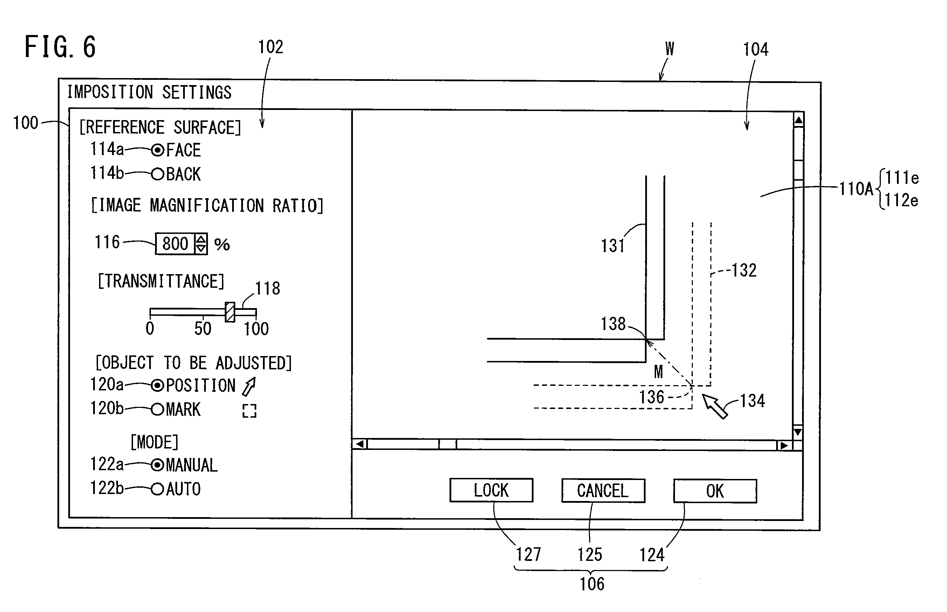

As shown in FIG. 6, based on the supplied display data, the display controller 40 displays a see-through image 110A at an image magnification ratio of 8 (800%), for example, in the image display field 104. The see-through image 110A includes a non-transmissive image region 111e that includes, in a substantially central area thereof, a non-transmissive corner register mark 131, indicated by solid lines, which corresponds to the corner register mark 84a (see FIG. 4A). The see-through image 110A also includes a transmissive image region 112e that includes, in a lower right area thereof, a transmissive corner register mark 132, indicated by broken lines, which corresponds to the corner register mark 94a (see FIG. 4B). In this manner, the see-through image 110 is displayed at an enlarged scale to make visible the positional deviation between both faces.

The operator may select the radio button 114b in order to reverse a transmissive/non-transmissive display, and may utilize the slide bar 118 in order to change the transmittance of the transmissive image region 112e. After the display form of the see-through image 110 has been changed in this manner, if the operator finds it necessary to adjust the position of the content images (step S4: YES), control proceeds to step S5.

In step S5, the image movement commander 66 designates a position or mark on the see-through image 110 by way of the user interface, so as to command movement of a content image group, e.g., the second content image group Cg2. In FIGS. 5 and 6, the display form of the see-through image 110 is changed with the non-transmissive image region 111 and the transmissive image region 112 being integrally combined with each other. This display state will hereinafter be referred to as a "locked" state.

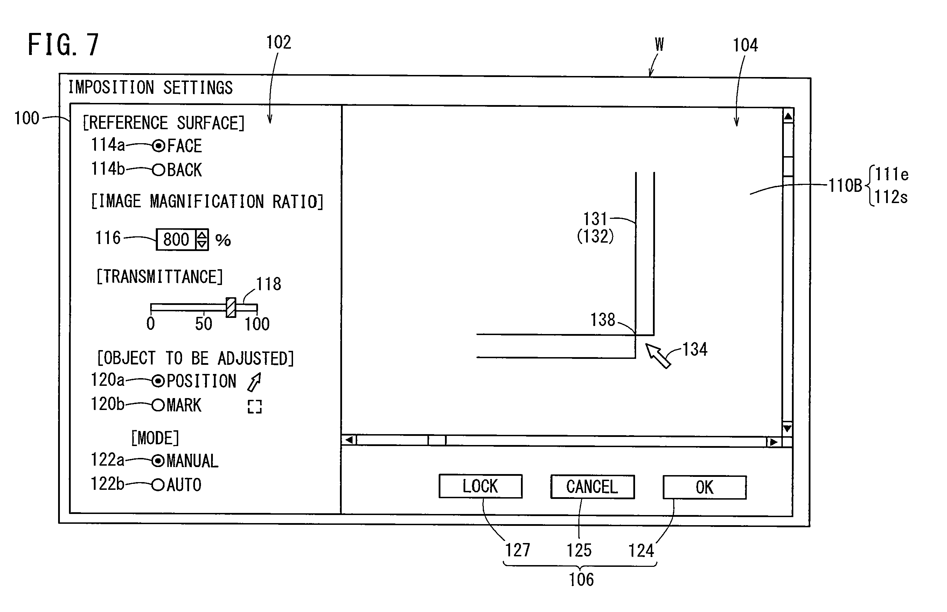

In a case where the operator clicks on the "UNLOCK" button 126 on the setting screen 100 (see FIG. 6), the see-through image 110 is unlocked from the locked state, and the "UNLOCK" button 126 is replaced with a "LOCK" button 127. In this state, if the operator clicks on the "LOCK" button 127 on the setting screen 100 (see FIGS. 6 and 7), the see-through image 110 is returned to the locked state, and the "LOCK" button 127 is replaced with the "UNLOCK" button 126 (see FIG. 5).

If the see-through image 110 is unlocked and the radio button 122a is selected, the operator can manually translate the transmissive image region 112 while the non-transmissive image region 111 remains fixed. A specific example in which the transmissive corner register mark 132 is moved into alignment with the non-transmissive corner register mark 131 will be described in detail below with reference to FIGS. 6 and 7.

As shown in FIG. 6, the operator places a cursor 134 at a position in the see-through image 110A, e.g., at the intersection of two L-shaped patterns that make up the transmissive corner register mark 132, and drags the cursor 134 from a start point 136 to an end point 138. Thereafter, the see-through image generator 64 generates a new see-through image 110, which reflects the movement of the transmissive image region 112e. Stated otherwise, in response to the movement command from the image movement commander 66, the see-through image generator 64 generates a see-through image in which the relative positions of the first content image group Cg1 and the second content image group Cg2 are changed.

As a result, as shown in FIG. 7, a see-through image 110B in which the relative positions of the non-transmissive image region 111e and a transmissive image region 112s are changed is displayed in the image display field 104. In the see-through image 110B shown in FIG. 7, the intersection of the non-transmissive corner register mark 131 and the intersection of the transmissive corner register mark 132 overlap each other and are aligned mutually at the end point 138. After having confirmed that the non-transmissive corner register mark 131 and the transmissive corner register mark 132 fully overlap one another in position, the operator clicks the "OK" button 124.

In the present embodiment, the corner register mark 84a (94a) is used as a positioning mark. However, any type of mark may be used as a positioning mark, insofar as the mark is used commonly in the first content image group Cg1 and the second content image group Cg2.

As shown in FIG. 6, if the operator selects the radio button 120a, the operator can designate respective positions of the start point 136 and the end point 138 with the cursor 134, thereby commanding movement of the transmissive image region 112e. Further, if the operator selects the radio button 120b, the operator can designate a desired area with frames, thereby commanding movement of the transmissive image region 112e in terms of marks.

If the operator selects the radio button 122b (FIGS. 5 through 7), the image movement commander 66 commands an automatic movement in order to bring the corner register marks 84a, 94a into alignment with each other, if the distance between the corner register marks 84a, 94a falls within a predetermined range, e.g., a range of 1 mm. In this case, the image movement commander 66 provides an assistive function for the convenience of the operator for supplementing manual image position adjustment.

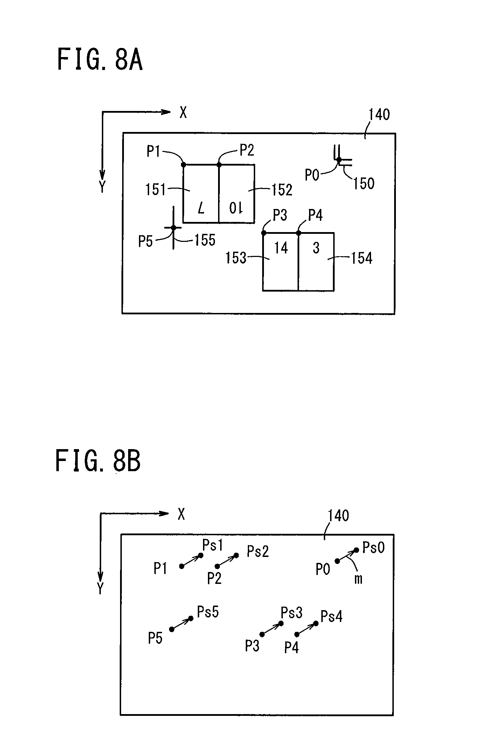

In step S6, the movement distance calculator 58 calculates a relative movement distance between before and after the movement by which the content image group is moved in response to the movement command issued in step S5. More specifically, the movement distance calculator 58 divides a vector, which is indicated by the arrow M (FIG. 6) from the start point 136 to the end point 138, by the image magnification ratio of the see-through image 110A, thereby calculating a relative movement distance in an image area 140 (see FIG. 8A) representing the second surface 90 (see FIG. 4B). It should be noted that leftward and rightward directions in coordinate systems on the first and second surfaces 80, 90 are opposite to each other.

In step S7, the position changer 60 changes the position of at least one content image of the first content image group Cg1 and the second content image group Cg2 depending on the relative movement distance calculated in step S6. An example of such a positional change at the time that the corner register mark 94a and a certain page area in the plate area 92 are to be moved simultaneously will be described below.

As shown in FIG. 8A, the image area 140, which has a rectangular shape, is substantially similar in shape to the second surface 90. The image area 140 includes an upper left corner defined as an origin, a longitudinal axis defined as an X-axis, and a transverse axis defined as a Y-axis. The image area 140 includes a mark image 150, four page images 151, 152, 153, 154, and a mark image 155. The mark image 150, the page images 151, 152, 153, 154, and the mark image 155 are positionally identified by respective representative points P1, P2, P3, P4, and P5.

The position changer 60 adds a relative movement distance (a vector ↑m) to the coordinates of the representative points, thereby changing the positions of content images to be moved. As shown in FIG. 8B, such changed representative points Ps1, Ps2, Ps3, Ps4, Ps5 are obtained by adding the vector ↑m to the respective representative points P1, P2, P3, P4, P5. Although in the example shown in FIG. 5, the quantity of the vector ↑m actually is extremely small, in FIG. 8B, the vector ↑m is shown as exaggerated for illustrative purposes.

In the illustrated embodiment, positions of the content images, which belong to the second content image group Cg2, are changed. However, positions of the content images that belong to the first content image group Cg1 may also be changed. The position changer 60 may further change positions of all of the content images, the content images per signature, or the content images per page, which are placed on the first surface 80 or the second surface 90.

The position changer 60 may inhibit the positions of the first content image group Cg1 and the second content image group Cg2 from being changed, or may allow the positions of the first content image group Cg1 and the second content image group Cg2, which have been inhibited from being changed, to be changed, in response to a predetermined command, e.g., the value of a flag included in the imposition data. Such a feature is effective to prevent the operator from mistakenly changing the content of the imposition data, the positional adjustment of which has already been completed.

Among the imposition data generated in steps S1 and S2, the imposition processor 50 updates information concerning the positions that were changed by the position changer 60. Thereafter, control returns to step S4 and steps S4 through S7 are repeated. If it is decided that positional adjustment is not required (step S4: NO), then control proceeds to step S8.

In step S8, the rasterizer 54 rasterizes the page description data based on various processing conditions including an ICC profile, thereby generating print data to be used in a printing process. More specifically, the rasterizer 54 places the content images while referring to the latest imposition data, which was updated in step S7.

In step S9, the print production system 10 carries out a proofreading and printing process. More specifically, the RIP 20 supplies the print data generated in step S8 to the proof press 24 or the platesetter 28. Accordingly, the proof press 24 or the offset press 32 can produce a proof 22 or a print 30.

As described above, the RIP 20 includes the see-through image generator 64, which generates a see-through image 110 in which a second content image group Cg2 on the second surface 90 of the output medium 35 is superposed on a first content image group Cg1 on the first surface 80 of the output medium 35 so as to be visible therethrough, as well as the image movement commander 66, which commands movement of one of the first content image group Cg1 and the second content image group Cg2 by designating a position or a mark on the displayed see-through image 110 through the user interface. Therefore, the operator can issue a command to move the first content image group Cg1 and the second content image group Cg2 while visually recognizing the relative positional relationship between content images in the see-through image 110. Thus, the positions of the content images, which are imposed on respective opposite surfaces of the output medium 35, can easily be adjusted.

The present invention is not limited to the above embodiment, but various changes and modifications may be made to the embodiment without departing from the scope of the invention.

For example, in the above embodiment, imposition data are updated based on the relative movement distance calculated by the movement distance calculator 58 (step S7). However, the imposition data may be updated in other ways. For example, the relative movement distance may be stored in the memory 48. Thereafter, in the event that the rasterizer is to rasterize the page description data, the relative movement distance may be read from the memory 48, and the positions of the content images may be changed based on the read relative movement distance. Such a modification also produces the same processed results as those according to the above embodiment.

## Claims

1. An image editing apparatus (20) for imposing at least one content image on both surfaces of an output medium (35), comprising:
a see-through image generator (64) for generating a see-through image (110, 110A, 110B) in which a second content image group (Cg2), which is placed on a second surface (90) as one of the both surfaces, is superposed on a first content image group (Cg1), which is placed on a first surface (80) as another of the both surfaces, so as to be visible therethrough;
a display unit (42) for displaying the see-through image (110, 110A, 110B) generated by the see-through image generator (64);
an image movement commander (66) for commanding movement of one of the first content image group (Cg1) and the second content image group (Cg2) by designating a position or a mark on the see-through image (110, 110A, 110B) displayed on the display unit (42) through a user interface;
a movement distance calculator (58) for calculating a relative movement distance between before and after the movement by which one of the first content image group (Cg1) and the second content image group (Cg2) is moved, in response to a movement command from the image movement commander (66); and
a position changer (60) for changing a position on the first surface (80) of at least one content image of the first content image group (Cg1), or a position on the second surface (90) of at least one content image of the second content image group (Cg2), by the relative movement distance calculated by the movement distance calculator (58).

2. The image editing apparatus (20) according to claim 1, wherein the see-through image generator (64) generates the see-through image (110, 110A, 110B) in which relative positions of the first content image group (Cg1) and the second content image group (Cg2) are changed, in response to the movement command from the image movement commander (66).

3. The image editing apparatus (20) according to claim 2, further comprising a display form commander (68) for commanding a display form of the see-through image (110, 110A, 110B).

4. The image editing apparatus (20) according to claim 3, wherein the display form commander (68) commands a display magnification ratio for the see-through image (110, 110A, 110B).

5. The image editing apparatus (20) according to claim 3, wherein the display form commander (68) commands a transmittance of the second content image group (Cg2) of the see-through image (110, 110A, 110B).

6. The image editing apparatus (20) according to claim 1, wherein the position changer (60) inhibits the positions of the first content image group (Cg1) and the second content image group (Cg2) from being changed, or allows the positions of the first content image group (Cg1) and the second content image group (Cg2), which have been inhibited from being changed, to be changed, in response to a predetermined command.

7. The image editing apparatus (20) according to claim 1, wherein the image movement commander (66) commands the movement by designating a positioning mark, which is included commonly in the first content image group (Cg1) and the second content image group (Cg2).

8. The image editing apparatus (20) according to claim 7, wherein the image movement commander (66) commands the movement by bringing positioning marks, which are included commonly in the first content image group (Cg1) and the second content image group (Cg2), into alignment with each other, if the distance between the positioning marks falls within a predetermined range.

9. The image editing apparatus (20) according to claim 1, wherein the position changer (60) changes positions of all of the content images, content images per signature, or content images per page, of the first content image group (Cg1) or the second content image group (Cg2).

10. An image editing method to be carried out by an image editing apparatus (20) for imposing at least one content image on both surfaces of an output medium (35), comprising the steps of:
generating a see-through image (110, 110A, 110B) in which a second content image group (Cg2), which is placed on a second surface (90) as one of the both surfaces, is superposed on a first content image group (Cg1), which is placed on a first surface (80) as another of the both surfaces, so as to be visible therethrough;
displaying the generated see-through image (110, 110A, 110B) on a display unit (42);
commanding movement of one of the first content image group (Cg1) and the second content image group (Cg2) by designating a position or a mark on the see-through image (110, 110A, 110B) displayed on the display unit (42) through a user interface;
calculating a relative movement distance between before and after the movement by which one of the first content image group (Cg1) and the second content image group (Cg2) is moved, in response to a movement command; and
changing a position on the first surface (80) of at least one content image of the first content image group (Cg1), or a position on the second surface (90) of at least one content image of the second content image group (Cg2), by the calculated relative movement distance.

11. A non-transitory storage medium (48) storing therein a program for imposing at least one content image on both surfaces of an output medium (35), the program enabling a computer (20) to carry out the steps of:
generating a see-through image (110, 110A, 110B) in which a second content image group (Cg2), which is placed on a second surface (90) as one of the both surfaces, is superposed on a first content image group (Cg1), which is placed on a first surface (80) as another of the both surfaces, so as to be visible therethrough;
displaying the generated see-through image (110, 110A, 110B) on a display unit (42);
commanding movement of one of the first content image group (Cg1) and the second content image group (Cg2) by designating a position or a mark on the see-through image (110, 110A, 110B) displayed on the display unit (42) through a user interface;
calculating a relative movement distance between before and after the movement by which one of the first content image group (Cg1) and the second content image group (Cg2) is moved, in response to a movement command; and
changing a position on the first surface (80) of at least one content image of the first content image group (Cg1), or a position on the second surface (90) of at least one content image of the second content image group (Cg2), by the calculated relative movement distance.
